# FASCICULE DE BREVET EUROPEEN

(11) **EP 0 999 628 B1**
(45) Date de publication et mention de la délivrance du brevet: **03.04.2002**
(21) Numéro de dépôt: 99402714.2
(22) Date de dépôt: 02.11.1999
(51) Int. Cl.: H02G 9/06, H02G 3/04, G02B 6/44, B29C 63/30, B29C 53/50

(54) **Dispositif de mise en place d'un profilé dans une conduite d'installation de câbles pour la subdiviser**
Vorrichtung zum Einsetzen eines Profils in ein zu unterteilendes Installationsrohr für Kabel
Device for inserting a profile into a cable installation conduit for partitioning

(30) Priorité: 02.11.1998 FR 9813750
(43) Date de publication de la demande: 10.05.2000
(73) Titulaire: FRANCE TELECOM, 75015 Paris (FR)
(72) Inventeur: Le Cam, Joel, 94230 Cachan (FR); Campion, Jean-Luc, 94230 Cachan (FR); Mignon, Pierre, 94230 Cachan (FR)
(74) Mandataire: Ballot, Paul

(56) Documents cités:
- FR-A- 2 730 101
- US-A- 4 529 009
- US-A- 4 804 020

## Description

La présente invention concerne un dispositif de mise en place d'un profilé dans une conduite d'installation de câbles pour la subdiviser. Elle se rapporte également à un procédé de mise en place de ce profilé utilisant le dispositif de l'invention.

De nombreux réseaux sont actuellement constitués de conduites unitaires afin d'y faire circuler un fluide ou pour accueillir un câble de transport d'énergie ou de signaux de télécommunications.

Les câbles à fibres optiques actuels, utilisés dans les nouveaux réseaux de télécommunications à fibres optiques, sont très denses (grande contenance avec des câbles à microgaines ou à rubans) et également très compacts pour des petites contenances : câbles à fibres multicoeurs par exemple.

Dans le cadre du développement de ces nouveaux réseaux de télécommunications à fibres optiques, FRANCE TELECOM a envisagé d'optimiser le volume disponible dans les conduites d'installation de câbles en développant un profilé multialvéolaire destiné à subdiviser une conduite. La pose d'un tel profilé dans une conduite a été envisagée en vue de poser un nombre de câbles plus important dans une conduite et de les rendre indépendants, afin que les contraintes induites par la pose d'un nouveau câble ne viennent pas s'appliquer à des câbles déjà mis en place dans le profilé.

Ainsi, le brevet FR 2 730 101 décrit un profilé multialvéolaire, conditionné à plat, destiné à partager une conduite d'installation de câbles en plusieurs sections. Le développement de ce profilé étant récent, aucun dispositif ou procédé, pour sa mise en place dans une conduite cylindrique n'a encore été étudié de manière sérieuse. Jusqu'à présent, le profilé est mis en forme cylindrique par un clipsage de ses extrémités et son introduction dans une conduite se fait à froid, sans précautions particulières.

Le fait de maintenir en force le profilé sous sa forme cylindrique (par clipsage), entraîne sa fragilisation : le profilé a tendance à devenir plus cassant, et sa résistance aux chocs mécaniques ainsi qu'à la torsion et à la flexion est très affaiblie. De plus, le fait d'introduire le profilé à froid dans la conduite, sans aucune intervention préalable sur celui-ci, engendre l'apparition d'importantes forces de frottement. Tous ces problèmes qui apparaissent empêchent par conséquent de poser le profilé sur des longueurs importantes. Les longueurs de pose sont en effet très inférieures à la distance minimum requise, qui est de 300 m et qui correspond à la distance entre deux chambres souterraines.

La présente invention permet de pallier les inconvénients de l'art antérieur. Elle propose pour cela un dispositif simple et peu coûteux permettant de mettre en place un profilé dans une conduite cylindrique, sur une grande longueur, sans que ce profilé soit fragilisé ou détérioré.

L'invention concerne plus particulièrement un dispositif de mise en place d'un profilé dans une conduite d'installation de câbles, ledit profilé possédant une largeur proche du périmètre intérieur de la conduite et comportant une semelle surmontée d'ailettes destinées à subdiviser ladite conduite, caractérisé en ce qu'il comprend :
- une arrivée d'air chaud destinée à ramollir la semelle du profilé,
- un cylindre extérieur, dont le diamètre est identique à celui de la conduite, et comportant un cône de formage à une extrémité pour permettre au profilé ramolli de prendre progressivement une forme cylindrique, et
- un noyau interne maintenu fixement à un emplacement situé dans le cône de formage du cylindre extérieur, et disposé à l'intérieur du profilé ramolli afin de lui assurer un diamètre interne constant lors de sa mise en forme.

Selon une autre variante le dispositif comporte en outre des tiges de préformage disposées entre l'arrivée d'air chaud et le cône de formage du cylindre extérieur.

Selon une autre forme d'exécution, le dispositif comporte en outre des tiges de guidage et de maintien du profilé, qui sont fixées sur la paroi interne du cylindre extérieur et qui se prolongent au-delà de son extrémité opposée au cône de formage.

Selon encore une autre forme d'exécution, le noyau interne comprend un tube métallique interne et une enveloppe externe réalisée dans un matériau présentant un faible coefficient de frottement. Ce matériau est par exemple constitué de polytétrafluoroéthylène.

Selon encore une autre forme d'exécution, l'arrivée d'air chaud est disposée de manière à ce qu'elle soit perpendiculaire à la semelle du profilé et située à une distance comprise entre 10 et 30 cm dudit profilé.

Un autre objet de l'invention concerne un procédé de mise en place d'un profilé dans une conduite d'installation de câbles, ledit profilé possédant une largeur proche du périmètre interne de la conduite et comportant une semelle surmontée d'ailettes destinées à subdiviser ladite conduite, ledit procédé utilisant le dispositif selon l'invention et étant caractérisé en ce qu'il comprend les étapes suivantes :
a) introduire une première longueur de profilé dans le cylindre extérieur,
b) rattacher l'extrémité de la première longueur de profilé introduite à un filin de tirage, lui-même relié à un treuil situé à l'extrémité de la conduite,
c) chauffer la semelle du profilé et effectuer un tirage simultané de manière à ce que le profilé :
   - dans un premier temps, pénètre dans le cylindre extérieur et prenne progressivement sa forme cylindrique, un noyau interne étant disposé à l'intérieur du profilé pour lui assurer un diamètre interne constant, et
   - dans un deuxième temps, se mettre en place le long de la conduite,
d) sectionner le profilé, après sa mise en place, à chaque extrémité de la conduite.

La température de chauffage est de préférence comprise entre 130 °C et 160 °C et la vitesse de tirage est de préférence comprise entre 2 et 3 m/ min.

D'autres particularités et avantages de l'invention apparaîtront à la lecture de la description donnée à titre d'exemple illustratif mais non limitatif, et faite en référence aux figures annexées qui représentent :
- la figure 1, un exemple, de profilé conditionné à plat,
- la figure 2, un schéma en perspective d'une conduite cylindrique occupée par le profilé de la figure 1,
- la figure 3, une vue en perspective d'un mode de réalisation du dispositif selon l'invention,
- la figure 4, une vue de dessus en coupe du dispositif de la figure 3,
- la figure 5, une vue en coupe d'un noyau interne du dispositif de la figure 3.

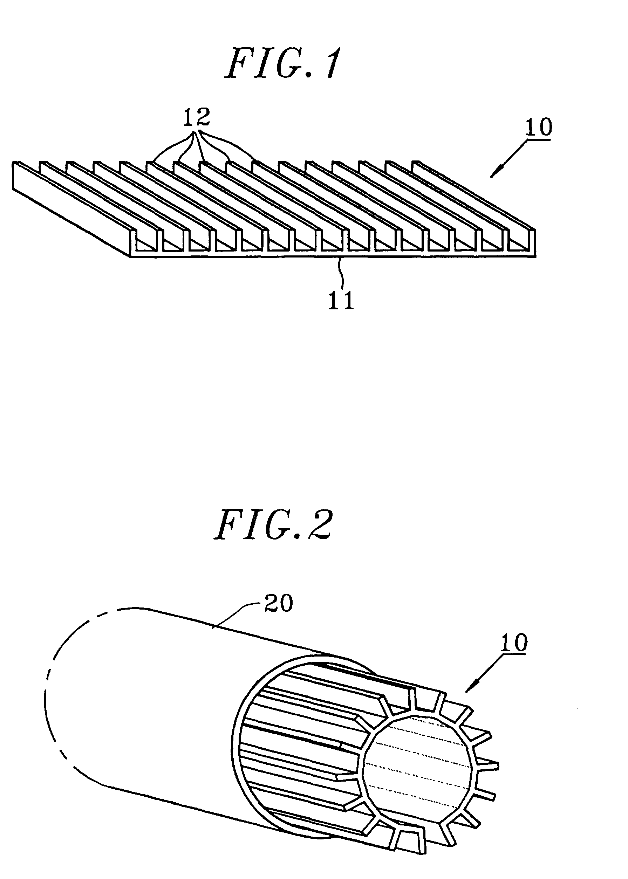

La figure 1 représente un exemple de profilé 10 destiné à être installé dans une conduite afin de la subdiviser en plusieurs sections indépendantes. Ce type de profilé 10 est conditionné à plat. Il est réalisé dans un matériau à base de polyéthylène ou à base de PVC (polychlorure de vinyle). Ce type de matériau est en effet intéressant car il présente une bonne tenue en pression, une bonne tenue en traction, une certaine souplesse, un coefficient de frottement relativement faible, et il peut être conditionné en bobines. Le profilé 10 illustré sur la figure 1 est un profilé dit en "peigne". Il comporte une semelle 11 surmontée d'ailettes 12 qui sont perpendiculaires à la semelle et qui sont parallèles entre elles pour former des rainures. Bien sûr, cette figure 1 ne représente qu'un exemple de profilé à installer dans une conduite, mais cet exemple n'est en aucun cas limitatif. D'autres profilés peuvent convenir. Le dispositif est en effet adaptable à différentes dimensions et formes de profilé. Ainsi, le profilé multialvéolaire décrit dans le brevet FR 2 730 101 peut également convenir.

La figure 2 schématise le même profilé 10 que sur la figure 1, introduit dans une conduite cylindrique 20. Les ailettes du profilé sont plaquées contre la paroi interne de la conduite et elles permettent ainsi de subdiviser la conduite en plusieurs sections indépendantes destinées à accueillir chacune un câble à fibres optiques. Le profilé 10 est par ailleurs découpé de manière à ce que sa largeur soit proche du périmètre intérieur de la conduite 20.

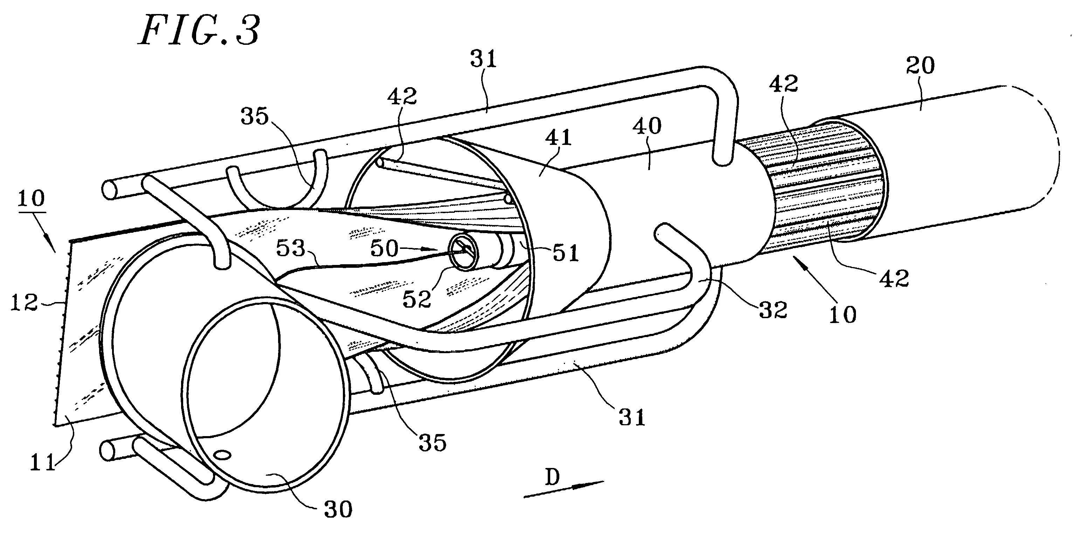

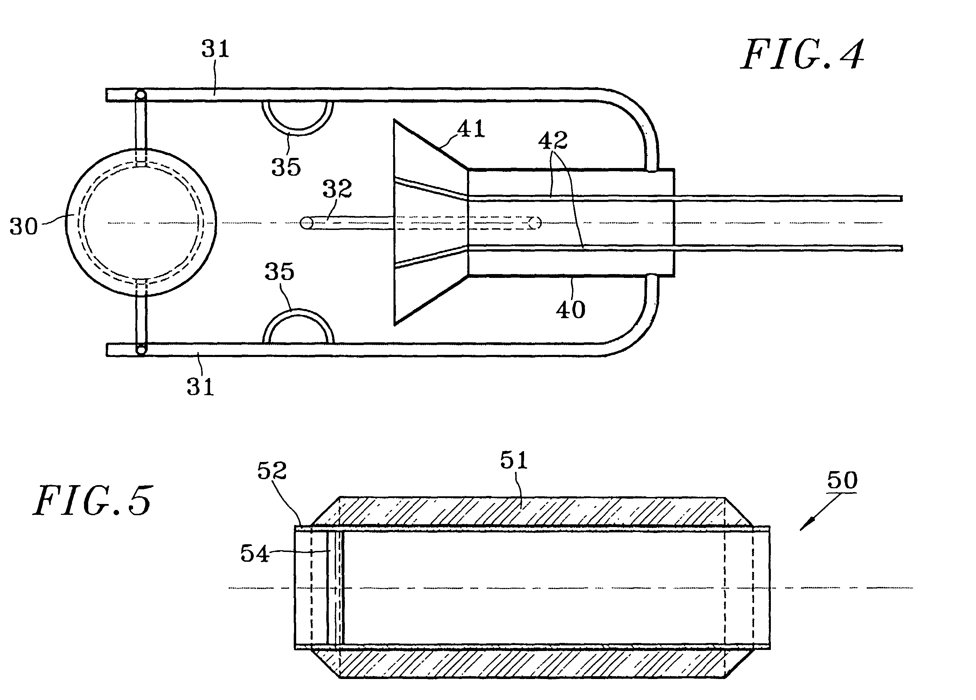

Le dispositif selon l'invention sera mieux compris au regard des figures 3 et 4 qui le représentent respectivement en perspective et de dessus en coupe. Le dispositif selon l'invention comporte une arrivée d'air chaud 30 et un système de guidage 40, 50. Le dispositif est disposé face à l'entrée d'une conduite 20 débouchant dans une chambre souterraine . On adapte sur l'arrivée d'air chaud 30, un conduit flexible isolé thermiquement, non représenté sur les figures 3 et 4, destiné à acheminer de l'air chaud produit par un système disposé à l'extérieur de la chambre souterraine. Cet air chaud permet de chauffer et de ramollir la semelle 11 du profilé 10 afin de faciliter sa mise en forme cylindrique.

Le double système de guidage comporte un cylindre extérieur 40 et un noyau interne 50. Le diamètre du cylindre extérieur 40 est de préférence identique, ou légèrement inférieur, à celui de la conduite 20. Ce cylindre 40 est disposé après l'arrivée d'air chaud 30, lorsque l'on considère le sens de déplacement du profilé (le sens est schématisé par la flèche D sur la figure 3) . Un cône de formage 41 disposé à l'extrémité avant du cylindre extérieur 40 permet au profilé 10 ramolli de prendre progressivement une forme cylindrique. Le profilé 10 ressort donc du cylindre extérieur 40 par l'extrémité arrière, opposée au cône de formage 41, avec une forme complètement cylindrique et il peut ainsi être mis en place dans la conduite 20. Le cylindre extérieur 40 est par ailleurs réalisé dans un matériau peu coûteux tel que de la tôle par exemple.

Le noyau interne 50 est maintenu fixe à un emplacement situé dans le cône de formage 41 du cylindre extérieur. Ce noyau est d'autre part disposé à l'intérieur du profilé 10 ramolli afin de lui assurer un diamètre interne constant lors de sa mise en forme. Le noyau 50 est rattaché à un câble rigide 53 lui-même terminé par une tablette, non visible sur les figures 3 et 4, destinée à s'adapter sur l'extrémité libre d'une canne 32 qui est elle-même fixée, par son autre extrémité, au cylindre extérieur. Ce système de fixation permet ainsi de maintenir le noyau 50 dans son emplacement, à l'intérieur du cône de formage 41. Ce noyau interne 50 a en outre pour fonction d'éviter l'apparition de phénomènes de striction susceptibles de se produire lors de la mise en forme et de la traction simultanée du profilé.

L'arrivée d'air chaud 30 est disposée à une distance raisonnable de la semelle 11 du profilé 10 pour ne pas le détériorer par un chauffage trop intense ou trop concentré sur une région du profilé. Cette distance est de préférence comprise entre 10 et 30 cm. Le chauffage est réalisé sur la semelle 11 du profilé 10, c'est à dire du côté opposé aux ailettes afin de ne pas écraser ces dernières et de garder des rainures bien formées. Par ailleurs, l'arrivée d'air chaud 30 est disposée perpendiculairement à la semelle 11 du profilé 10. Elle ne doit pas en effet être penchée vers le cône de formage 41 et la conduite 20 car une propagation de l'air chaud dans la conduite pourrait être néfaste pour le profilé. En effet, après sa mise en forme, le profilé 10 doit être refroidi rapidement, et une propagation d'air chaud résiduel dans la conduite peut être suffisante pour ramollir à nouveau le profilé qui subit alors des déformations non désirées.

Le dispositif selon l'invention peut également comporter des tiges 42 de guidage et de maintien du profilé 10. Ces tiges ne sont pas indispensables. Elles sont par exemple au nombre de 5 ou 6. Elles sont fixées, de manière à ce qu'elles soient régulièrement espacées sur la paroi interne du cylindre extérieur 40 et se prolongent au-delà de l'extrémité arrière de ce cylindre 40, à l'opposé du cône de formage 41. Le profilé 10 est mis en forme par le cylindre extérieur 40 et il est positionné de telle sorte que chaque tige 42 se glisse dans une rainure. Ces tiges 42 permettent non seulement de guider le profilé 10 à l'entrée de la conduite 20, mais aussi de le maintenir. Elles permettent en effet d'éviter une rotation en hélice du profilé 10 qui n'est pas encore bien refroidit et rigidifié à l'entrée de la conduite.

Des tiges de préformage 35 peuvent en outre être prévues afin d'améliorer et de faciliter encore la mise en forme cylindrique du profilé. Elles présentent par exemple une forme arrondie et sont disposées entre l'arrivée d'air chaud 30 et le cône de formage 41 du cylindre extérieur 40. Ces tiges 35 permettent ainsi d'obtenir une préforme sur le profilé 10, avant sa mise en forme définitive dans le cylindre extérieur 40.

D'autre part, deux barres parallèles 31 permettent de maintenir le dispositif en un seul tenant et de solidariser les différents éléments de constitution. L'arrivée d'air chaud 30, le cylindre extérieur 40 et les tiges de préformage 35 sont notamment fixés à ces deux barres 31.

Afin de pouvoir tirer le profilé 10, mis en forme cylindrique, dans la conduite 20, il est nécessaire de disposer d'une première longueur suffisante de profilé, à l'entrée de la conduite 20, pour y fixer un filin de tirage, lequel est relié à un treuil situé à l'autre extrémité de la conduite. Pour cela, une première étape du procédé de mise en place du profilé 10, consiste à introduire une première longueur de profilé dans le cylindre extérieur 40. Cette première longueur est par exemple comprise entre 1 m et 1,50 m. L'introduction de cette première longueur de profilé dans le cylindre extérieur 40 peut se faire soit à froid, soit après une légère chauffe de l'extrémité du profilé. La manière dont est réalisée cette introduction importe peu étant donné que la première longueur introduite ne sert qu'à permettre la fixation, dans une deuxième étape du procédé, du filin de tirage. Si cette première longueur est endommagée, il suffira de la sectionner à la sortie de la conduite, après la mise en place du profilé.

Le système de fixation du filin de tirage peut être réalisé de différentes manières. Ce peut être une chaussette en acier ou en nylon tressé que l'on fait coulisser sur la première longueur du profilé et qui se resserre autour de ce profilé sous l'effet de l'effort de traction. Dans un autre exemple, ce peut être un collier que l'on fixe par serrage autour de la première longueur de profilé cylindrique.

La troisième étape du procédé concerne la mise en place proprement dite. Elle consiste à chauffer la semelle du profilé et à effectuer simultanément un tirage.

Ainsi, dans un premier temps, le profilé pénètre dans le cylindre extérieur 40 et prend sa forme cylindrique grâce au double système de guidage 40, 50 décrit ci-dessus. La chauffe permet de ramollir le profilé pour faciliter sa mise en forme. La température de chauffage est de préférence comprise entre 130 et 160 °C.

Dans un deuxième temps, le profilé de forme cylindrique obtenu pénètre dans la conduite 20. La vitesse de tirage du profilé est de préférence comprise entre 2 et 3 m / min.

La dernière étape du procédé consiste à sectionner les extrémités du profilé, après sa mise en place le long de la conduite 20, à chaque extrémité de la conduite.

Le dispositif selon l'invention peut en outre être fixé sur un étai, ou sur tout autre support, se trouvant face à la conduite 20. Cette fixation permet d'équilibrer le dispositif qui va être sollicité par les contraintes de tirage directement appliquées au profilé.

La figure 5 représente un schéma en coupe du noyau interne 50. Ce noyau comporte en fait un tube métallique interne 52 et une enveloppe externe 51 réalisée dans un matériau présentant un faible coefficient de frottement, afin d'éviter toute dégradation du profilé due à des contraintes de frottement trop importantes. Ce matériau de constitution de l'enveloppe externe 51 peut par exemple être du polytétrafluoroéthylène. Le métal de constitution du tube interne 52 peut par exemple être de l'inox. D'autre part, une tige métallique 54 est prévue en travers du tube interne 52 afin d'y accrocher le cordon 53 de fixation du noyau interne 50.

Le noyau interne 50 confère un diamètre interne global constant au profilé. A titre d'exemple, ce diamètre peut être de l'ordre de 50 mm. Le noyau interne 50 n'a par ailleurs pas besoin d'être aussi long que le cylindre extérieur 40. La longueur est en général de l'ordre de 15 cm ou inférieur.

Lorsqu'il pénètre dans la conduite, le profilé 10 a une légère tendance à s'ouvrir si bien que ses ailettes sont plaquées contre les parois internes de la conduite. Pour limiter les efforts de frottement dans la conduite et notamment dans les passages courbés, la partie supérieure des ailettes du profilé peut en outre être légèrement arrondie. On peut également ajouter un lubrifiant au cours de la pose si on estime que les efforts de frottement sont encore un peu élevés.

Le profilé 10 posé au moyen du dispositif selon l'invention n'exerce aucune contrainte sur les parois de la conduite hormis celle de son propre poids. Lors de sa pose, il se comporte comme un câble : les efforts de tirage ne proviennent que des frottements résultant de son poids et de sa rigidité de flexion. Le profilé garde définitivement cette forme cylindrique, et possède de bonnes qualités de résistance mécanique face aux opérations de tirage ou de câblage qu'il devra supporter.

## Revendications

1. Dispositif de mise en place d'un profilé (10) dans une conduite (20) d'installation de câbles, ledit profilé (10) possédant une largeur proche du périmètre intérieur de la conduite (20) et comportant une semelle (11) surmontée d'ailettes (12) destinées à subdiviser ladite conduite, **caractérisé en ce qu'**il comprend :
- une arrivée d'air chaud (30) destinée à ramollir la semelle (11) du profilé (10),
- un cylindre extérieur (40), dont le diamètre est identique à celui de la conduite (20), et comportant un cône de formage (41) à une extrémité pour permettre au profilé ramolli de prendre progressivement une forme cylindrique, et
- un noyau interne (50) maintenu fixement à un emplacement situé dans le cône de formage (41) du cylindre extérieur (40), et disposé à l'intérieur du profilé (10) ramolli afin de lui assurer un diamètre interne constant lors de sa mise en forme.

2. Dispositif selon la revendication 1, **caractérisé en ce qu'**il comporte en outre des tiges (35) de préformage disposées entre l'arrivée d'air chaud (30) et le cône de formage (41) du cylindre extérieur (40).

3. Dispositif selon l'une des revendications 1 à 2, **caractérisé en ce qu'**il comporte en outre des tiges (42) de guidage et de maintien du profilé (10), qui sont fixées sur la paroi interne du cylindre extérieur (40) et qui se prolongent au delà de son extrémité opposée au cône de formage (41).

4. Dispositif selon l'une des revendications 1 à 3, **caractérisé en ce que** le noyau interne (50) comprend un tube métallique interne (51) et une enveloppe externe (52) réalisée dans un matériau présentant un faible coefficient de frottement.

5. Dispositif selon la revendication 4, **caractérisé en ce que** l'enveloppe externe (52) du noyau interne (50) est constituée de polytétrafluoroéthylène.

6. Dispositif selon l'une des revendications 1 à 5, **caractérisé en ce que** l'arrivée d'air chaud (30) est disposée de manière à ce qu'elle soit perpendiculaire à la semelle (11) du profilé (10) et située à une distance comprise entre 10 et 30 cm dudit profilé.

7. Procédé de mise en place d'un profilé (10) dans une conduite (20) d'installation de câbles, ledit profilé (10) possédant une largeur proche du périmètre intérieur de la conduite (20), et comportant une semelle (11) surmontée d'ailettes (12) destinées à subdiviser ladite conduite, ledit procédé utilisant le dispositif selon l'une des revendications 1 à 6 et étant **caractérisé en ce qu'**il comprend les étapes suivantes :
a) introduire une première longueur de profilé dans le cylindre extérieur (40),
b) rattacher l'extrémité de la première longueur de profilé introduite à un filin de tirage, lui-même relié à un treuil situé à l'extrémité de la conduite,
c) chauffer la semelle (11) du profilé (10) et effectuer un tirage simultané de manière à ce que le profilé (10) :
- dans un premier temps, pénètre dans le cylindre extérieur (40) et prenne progressivement sa forme cylindrique, un noyau interne (50) étant disposé à l'intérieur du profilé pour lui assurer un diamètre interne constant, et
- dans un deuxième temps se mette en place le long de la conduite (20),
d) sectionner le profilé (10), après sa mise en place, à chaque extrémité de la conduite (20).

8. Procédé selon la revendication 7, **caractérisé en ce que** la température de chauffage est comprise entre 130 et 160 °C.

9. Procédé selon l'une des revendications 7 à 8, **caractérisé en ce que** la vitesse de tirage est comprise entre 2 et 3 m/min.

## Claims

1. Device for placing a profile (10) in position in a cable installation conduit (20), said profile (10) having a breadth close to the internal perimeter of the conduit (20) and comprising a sole (11) surmounted by ribs (12) designed to subdivide said conduit, **characterised in that** it comprises:
- a hot air inlet (30) designed to soften the sole (11) of the profile (10),
- an external cylinder (40) the diameter of which is identical to that of the conduit (20) and having a forming cone (41) at one end to allow the softened profile to progressively adopt a cylindrical shape, and
- an internal core (50) held fixedly in a location situated in the forming cone (41) of the external cylinder (40) and disposed inside the softened profile (10) in order to give it a constant internal diameter during its forming.

2. Device according to claim 1, **characterised in that** it additionally comprises preforming rods (35) disposed. between the hot air inlet (30) and the forming cone (41) of the external cylinder (40).

3. Device according to one of claims 1 to 2, **characterised in that** it additionally comprises rods (42) for guiding and holding the profile (10), which are fixed to the internal wall of the external cylinder (40) and which extend beyond its opposite end to the forming cone (41).

4. Device according to one of claims 1 to 3, **characterised in that** the internal core (50) comprises an internal metal tube (51) and an external envelope (52) made of a material having a low coefficient of friction.

5. Device according to claim 4, **characterised in that** the external envelope (52) of the internal core (50) is constituted of polytetrafluorethylene.

6. Device according to one of claims 1 to 5, **characterised in that** the hot air inlet (30) is disposed so that it is perpendicular to the sole (11) of the profile (10) and situated a distance of between 10 and 30 cm from said profile.

7. Method of placing a profile (10) in position in a cable installation conduit (20), said profile (10) having a breadth close to the internal perimeter of the conduit (20) and comprising a sole (11) surmounted by ribs (12) designed to subdivide said conduit, said method using the device according to one of claims 1 to 6 and being **characterised in that** it comprises the following steps:
a) introducing a first length of profile into the external cylinder (40),
b) attaching the end of the first length of profile introduced to a drawing rope, itself connected to a winch situated at the end of the conduit,
c) heating the sole (11) of the profile (10) and simultaneously pulling so that the profile (10):
- firstly enters the external cylinder (40) and progressively adopts its cylindrical shape, an internal core (50) being disposed inside the profile to give it a constant internal diameter, and
- secondly is placed in position along the conduit (20),
d) cutting the profile (10) after it has been placed in position at each end of the conduit (20).

8. Method according to claim 7, **characterised in that** the heating temperature lies between 130 and 160°C.

9. Method according to one of claims 7 to 8, **characterised in that** the drawing speed lies between 2 and 3 m/min.

## Patentansprüche

1. Vorrichtung zum Einsetzen eines Profils (10) in ein Installationsrohr (20) für Kabel, wobei das Profil (10) eine Weite hat, die annähernd so groß ist wie der Innendurchmesser des Rohrs (20), und eine Sohle (11) hat, aus der sich Rippen (12) erheben, die dazu dienen, das genannte Rohr zu unterteilen,
**dadurch gekennzeichnet, dass** sie umfasst:
- eine Zuführung (30) für warme Luft, die dazu dient, die Sohle (11) des Profils (10) zu erweichen,
- einen Außenzylinder (40), dessen Durchmesser mit dem des Rohrs (20) identisch ist und der an einem Ende einen Formungskonus (41) umfasst, der dem erweichten Profil ermöglicht, progressiv eine zylindrische Form anzunehmen, und
- einen Innenkern (50), der an einer Stelle festgehalten wird, die sich in dem Formungskonus (41) des Außenzylinders (40) befindet, im Innern des erweichten Profils (10), um sicherzustellen, dass dieses während seiner Formung mit einem konstanten Innendurchmesser versehen wird.

2. Vorrichtung nach Anspruch 1, **dadurch gekennzeichnet, dass** sie außerdem Vorformungs-Stangen (35) umfasst, die zwischen der Warmluftzuführung (30) und dem Formungskonus (41) des Außenzylinders (40) angeordnet sind.

3. Vorrichtung nach einem der Ansprüche 1 bis 2, **dadurch gekennzeichnet, dass** sie außerdem Stangen (42) umfasst, die der Führung und dem Halt des Profils (10) dienen, auf der Innenwand des Außenzylinders (40) befestigt sind und sich über sein dem Formungskonus (41) entgegengesetztes Ende hinaus erstrecken.

4. Vorrichtung nach einem der Ansprüche 1 bis 3, **dadurch gekennzeichnet, dass** der Innenkern (50) ein metallisches Innenrohr (51) und eine Außenhülle (52) umfasst, die aus einem Material mit einem niedrigen Reibungskoeffizienten hergestellt ist.

5. Vorrichtung nach Anspruch 4, **dadurch gekennzeichnet, dass** die Außenhülle (52) des Innenkerns (50) aus Polytetrafluorethylen ist.

6. Vorrichtung nach einem der Ansprüche 1 bis 5, **dadurch gekennzeichnet, dass** die Warmluftzuführung (30) so angeordnet ist, dass sie zu der Sohle (11) des Profils (10) senkrecht ist und ihr Abstand von dem genannten Profil zwischen 10 und 30 cm beträgt.

7. Verfahren zum Einsetzen eines Profils (10) in ein Installationsrohr (20) für Kabel, wobei das Profil (10) eine Weite hat, die annähernd so groß ist wie der Innendurchmesser des Rohrs (20), und eine Sohle (11) umfasst, aus der sich Rippen (12) erheben, die dazu dienen, das genannte Rohr zu unterteilen, dabei in diesem Verfahren die Vorrichtung nach einem der Ansprüche 1 bis 6 benutzt wird und es **dadurch gekennzeichnet ist, dass** es die folgenden Schritte umfasst:
a) Einführen einer ersten Profillänge in den Außenzylinder (40),
b) Befestigen des Endes der ersten Profillänge an einem Zugseil, seinerseits mit einer Winde verbunden, die sich am Ende des Rohrs befindet,
c) Erwärmen der Sohle (11) des Profils (10) und gleichzeitiges Ziehen, sodass das Profil (10):
- zunächst in den Außenzylinder (40) eindringt und progressiv seine zylindrische Form annimmt, wobei ein Innenkern (50) im Innern des Profils angeordnet ist, um ihm einen konstanten Innendurchmesser zu verleihen, und
- dann in das Rohr (20) eingesetzt bzw. hineingezogen werden kann, über dessen gesamte Länge,
d) Durchtrennen des Profils (10), nachdem es eingesetzt wurde, an jedem Ende des Rohrs (20).

8. Verfahren nach Anspruch 7, **dadurch gekennzeichnet, dass** die Erwärmungstemperatur zwischen 130 und 160 °C enthalten ist.

9. Verfahren nach einem der Ansprüche 7 bis 8, **dadurch gekennzeichnet, dass** die Ziehgeschwindigkeit zwischen 2 und 3 m/min enthalten ist.
